# EUROPEAN PATENT APPLICATION

(11) **EP 2 434 408 A1**
(43) Date of publication of application: **28.03.2012**
(21) Application number: 10777479.6
(22) Date of filing: 25.02.2010
(51) Int. Cl.: G06F 13/00

(54) **DEVICE FOR PREVENTING ERRONEOUS E-MAIL TRANSMISSION**

(30) Priority: 20.05.2009 JP 2009121653
(71) Applicant: Panasonic Corporation, Kadoma-shi Osaka 571-8501 (JP)
(72) Inventor: ODA, Yasuyo, Osaka 540-6207 (JP)
(74) Representative: Grünecker, Kinkeldey, Stockmair & Schwanhäusser
(86) International application number: PCT/JP2010/001299
(87) International publication number: WO 2010/134239

(57) **Abstract**

In the case where an e-mail transmission to a plurality of persons is to be performed at one time, e-mail erroneous transmission due to a setting error of an e-mail address or the like can be prevented from occurring. In an e-mail transmitting and receiving apparatus, an address storing portion 113 which stores a plurality of e-mail addresses; an input operating portion 101 in which, during e-mail creation, a plurality of destination addresses are input; an attribute discriminating unit 120 which discriminates attribute information of the plurality of destination addresses while referring to the address storing portion; and an informing unit 123 are included. In the case where the attribute discriminating unit discriminates that a destination address having different attribute information exists in the plurality of destination addresses, the informing unit shows a user that an unusual setting is contained.

## Description

### Technical Field

The present invention relates to an e-mail transmitting and receiving apparatus which exchanges sentences and files while using a communication network line.

### Background Art

An e-mail is exchanged between personal computers connected to a communication network, or portable devices connected to a wireless communication network, such as portable telephones, and in recent years widely used not only in business in companies or the like, but also as communication means between individuals.

On the other hand, leakage of personal information or secret information due to an error in destination setting in creation of an e-mail may sometimes cause a problem.

In order to solve the problem, in Patent Reference 1, the screen background color and output sound in the case of creation of an e-mail are previously set for each user in an address book, and, when the e-mail address is to be set in creation of an e-mail, the background and the sound output are produced in accordance with the setting of the address book, thereby preventing the e-mail from being erroneously transmitted.

### Prior Art Document

### Patent Document

Patent Document 1: JP-A-2004-145418

### Summary of the Invention

### Problems that the Invention is to Solve

However, the above-described method can solve the problem, only in the case where an e-mail has one destination. Also in the case where an e-mail has a plurality of destinations, there is a high possibility that "erroneous e-mail address" hides among "correct (to be originally transmitted) e-mail addresses", and erroneous transmission is not realized. In the event of erroneous transmission, effects due to leakage of personal information or secret information are large in the case where an e-mail in which a plurality of destinations are set is transmitted.

In the case where a function of interpolation of an input of an e-mail address is incorporated in e-mail creation software, and addresses in which initial characters or the like of the respective e-mail addresses coincide with each other are registered, there is a possibility that, even when an e-mail address which is different from the e-mail address that is to be set as the destination is input in the destination field, the user fails to notice the difference.

The invention has been conducted in order to solve the above-discussed problems. It is an object of the invention to, when a plurality of e-mail addresses are set in the destination field of an e-mail, discriminate an e-mail address which may be erroneous, and exhibit its result to the visual sense, the auditory sense, or the like of the user who creates the e-mail, thereby causing the user to notice the erroneous setting of an e-mail address.

### Means for Solving the Problems

In order to solve the above-discussed conventional problems, the invention is **characterized in that** the invention includes: an address storing portion which stores a plurality of e-mail addresses; an input operating portion in which, during e-mail creation, a plurality of destination addresses are input; an attribute discriminating unit which discriminates attribute information of the plurality of destination addresses while referring to the address storing portion; and an informing unit, and, in a case where the attribute discriminating unit discriminates that a destination address having different attribute information exists in the plurality of destination addresses, the informing unit shows a user that an unusual setting is contained.

In the address storing portion, one or a plurality of e-mail addresses are stored while being classified into groups, and, for each of the groups, a value, set color, or set sound which indicates significance of the group is stored in correspondence with the group.

According to the configuration, when a plurality of addresses are set in the destination field of an e-mail, the addresses are classified by using information which is stored as attributes of the addresses in the address storing portion, and a situation where the attributes of an address set after the classification are different is exhibited to the user who creates the e-mail, by using the informing unit, whereby the user can be caused to notice the erroneous setting of the address.

The attribute discriminating unit which classifies the plurality of new destination e-mail addresses discriminates attribute information of address groups by using:
grouping information in the address storing portion;
information stored in a transmission/reception history storing portion which correspondingly stores addresses of e-mails that were transmitted or received, and transmission/reception times of the e-mails, the information indicating whether the plurality of destination addresses are respectively e-mail addresses that were transmitted or received or not;
significance of each group stored in the address storing portion;
significance of each e-mail address;
an input method corresponding to the destination address, and stored in an input method discriminating and storing portion which stores input methods, the input methods respectively indicating ways how the user inputted the plurality of destination addresses which are set as destinations; and
a distinction between charging and free of charge of transmission and reception in a setting corresponding to an e-mail address stored in the address storing portion.

As a method of inputting the plurality of destination addresses, the following methods may be contemplated: a method in which address data stored in the address storing portion are referred and selected to be input as a new address;
a method in which an e-mail address is input one character by one character as a new address by the input operating portion;
a method in which, with respect to one character or plurality of character strings that are input by the input operating portion, an e-mail address is input as a new address by using an address interpolating unit that refers the address storing portion to show the user an e-mail address having the character string as an e-mail address candidate; or
a method in which an e-mail address stored in the transmission/reception history storing portion is selected to be input as a new address.

Furthermore, the invention includes a reliability index determining unit which, based on the grouping information in the address storing portion and a result of the attribute discrimination using a past transmission/reception history stored in the transmission/reception history storing portion, determines a group in which a number of addresses having a same attribute is largest, as a main group, and determines a group which is otherwise, as a subgroup. If the reliability index determining unit determines that the subgroup exists,
in the case where only one "subgroup" is set, all mail addresses which do not belong to the main group are determined as one subgroup.

In the case where a plurality of "subgroups" are set, mail addresses other than the main group are again subjected to discrimination with respect to attribute information by the attribute discriminating unit, and classified into a plurality of subgroups, and the subgroups are ranked by the reliability index determining unit in descending order of a number of mail addresses which belong to each of the subgroups.

The device for preventing erroneous e-mail transmission of the invention is **characterized in that** the informing unit announces that attributes of "main group" and "one or plurality of subgroups" which are determined by the reliability index determining unit are different from each other.

According to the configuration, when a plurality of mail addresses are set in the destination field of an e-mail, the mail addresses are classified by using information which is stored as attribute information of the mail addresses in the address storing portion, and new destination addresses of "main group" in which the possibility of an erroneous setting of an e-mail address is low, and those of "subgroups" in which there is a possibility of an erroneous setting of an e-mail address can be classified by the comparison of the numbers of mail addresses contained in sets of the classified mail addresses. A situation where these sets of attribute information are different from each other is exhibited to the user who creates the mail, by using the informing unit, whereby the user can be caused to notice the erroneous setting of the mail address.

Furthermore, the invention includes a reliability index determining unit which, based on a result of determination of the attribute discriminating unit on the significance of each address group or mail address in the address storing portion, determines an address group or mail address in which highest significance is set, as a main group, and determines a group which is otherwise, as a subgroup.

If the reliability index determining unit determines that the subgroup exists, in the case where only one "subgroup" is set, all mail addresses which do not belong to the main group are determined as one subgroup. In the case where a plurality of "subgroups" are set, mail addresses other than the main group are again subjected to discrimination with respect to attribute information by the attribute discriminating unit to be classified into a plurality of subgroups, and the subgroups are ranked by the reliability index determining unit in accordance with the significances of address groups belonging to the subgroups or mail addresses.

The device for preventing erroneous e-mail transmission of the invention is **characterized in that** the informing unit announces that attribute information of "main group" and that of "one or plurality of subgroups" which are determined by the reliability index determining unit are different from each other.

According to the configuration, when a plurality of mail addresses are set in the destination field of an e-mail, the mail addresses are classified by using significance of each address group or address which is stored as attribute information of the mail addresses in the address storing portion, and new destination addresses of "main group" in which the possibility of an erroneous setting of an e-mail address is low, and those of "subgroups" in which there is a possibility of an erroneous setting of an e-mail address can be classified by the comparison of the significance of mail addresses contained in sets of the classified mail addresses. A situation where these sets of attribute information are different from each other is exhibited to the user who creates the mail, by using the informing unit, whereby the user can be caused to notice the erroneous setting of the mail address.

Furthermore, the invention includes a reliability index determining unit which, based on a result of determination of the attribute discriminating unit by the above-described address inputting unit, determines an e-mail address which is input by a first address input method that is previously set by the device for preventing erroneous e-mail transmission or the user, as a main group, and determines a group which is otherwise, as a subgroup.

If the reliability index determining unit determines that the subgroup exists, in the case where only one "subgroup" is set, all mail addresses which do not belong to the main group are determined as one subgroup. In the case where a plurality of "subgroups" are set, mail addresses other than the main group are again subjected to discrimination with respect to attribute information by the above-described attribute discriminating unit to be classified into a plurality of subgroups, and, by the device for preventing erroneous e-mail transmission or an address input method which is previously ranked and set by the user, the plurality of subgroups are ranked by using the reliability index determining unit in accordance with the ranking order of the input method.

The device for preventing erroneous e-mail transmission of the invention is **characterized in that** the informing unit announces that attributes of "main group" and "one or plurality of subgroups" which are determined by the reliability index determining unit are different from each other.

According to the configuration, when a plurality of mail addresses are set in the destination field of an e-mail, the mail addresses are classified by using significance of the inputting unit for an e-mail address, and new destination addresses of "main group" in which the possibility of an erroneous setting of an e-mail address is low, and those of "subgroups" in which there is a possibility of an erroneous setting of an e-mail address can be classified by the significance comparison of mail addresses contained in sets of the classified mail addresses. A situation where these sets of attribute information are different from each other is exhibited to the user who creates the mail, by using the informing unit, whereby the user can be caused to notice the erroneous setting of the mail address. Furthermore, the invention is **characterized in that** the invention includes a reliability index determining unit which, based on a result of the discrimination of the attribute discriminating unit due to the distinction between charge and free of charge of the destination mail address in transmission and reception of the mail, determines a group in which mail transmission and reception are free of charge, as a main group, and determines a group which is otherwise, as a subgroup, and the informing unit announces that attributes of "main group" and "one or plurality of subgroups" are different from each other.

According to the configuration, when a plurality of mail addresses are set in the destination field of an e-mail, the mail addresses are classified by using information indicating whether mail transmission and reception are "charge" or "free of charge", new destination addresses of "main group" and of "subgroups" can be classified, and a situation where the attributes of these are different from each other can be exhibited to the user who creates the mail, by using the informing unit.

The invention is **characterized in that** the invention includes a displaying portion as the informing unit, and, in a case where the attribute discriminating unit discriminates that a destination address having a different attribute is contained, announcement is performed by displaying a color difference of two more colors on the displaying portion. According to the configuration, the possibility of "erroneous setting" and the rate (degree) of the number of erroneous settings can be notified to the user by a method in which they are easily visually captured. Moreover, the possibility of an erroneous setting is exhibited by a relative difference between "attribute information" of "set of mail addresses in which the mail address setting is considered to be correct" and "set of addresses which are otherwise, and in which there is a possibility that the mail address setting is erroneous". Even when the user forgets the set values of background colors of respective mail addresses, therefore, it is possible to prevent an erroneous setting from being missed.

The invention includes a speaker as the informing unit, and, in a case where the attribute discriminating unit discriminates that a destination address having a different attribute is contained, announcement is performed by outputting a sound from the speaker.

According to the configuration, the possibility of "erroneous setting" can be notified to the user by a method in which it is easily auditorily captured. Moreover, the possibility of an erroneous setting is notified by a relative difference between "attribute information" of "set of mail addresses in which the mail address setting is considered to be correct" and "set of addresses which are otherwise, and in which there is a possibility that the mail address setting is erroneous". Even when the user forgets incoming tones or the like which are set for respective mail addresses, therefore, it is possible to prevent an erroneous setting from being missed.

The invention is **characterized in that** the invention includes a vibrating portion as the informing unit, and, in a case where the attribute discriminating unit discriminates that a destination address having a different attribute is contained, announcement is performed by vibrations of the vibrating portion.

According to the configuration, the possibility of "erroneous setting" can be notified to the user by a method in which it is easily sensuously captured. Moreover, the possibility of an erroneous setting is notified by a relative difference between "attribute information" of "set of mail addresses in which the mail address setting is considered to be correct" and "set of addresses which are otherwise, and in which there is a possibility that the mail address setting is erroneous". Even when the user forgets incoming tones or the like which are set for respective mail addresses, or when a silent mode or the like is set and an audio output is disabled, therefore, it is possible to prevent an erroneous setting from being missed.

### Effects of the Invention

According to the invention, in the case where an e-mail transmission to a plurality of persons is to be performed at one time, it is possible to prevent mail erroneous transmission due to a setting error of an e-mail address or the like from occurring.

### Brief Description of the Drawings

[Fig. 1] Fig. 1 is a block diagram showing an erroneous e-mail transmission prevention apparatus according to Embodiments 1, 2, and 3 of the present invention.
[Fig. 2] Fig. 2 is a flowchart showing the operation of the erroneous e-mail transmission prevention apparatus according to Embodiments 1, 2, and 3 of the present invention.
[Fig. 3] Fig. 3 is a flowchart showing the operation of an attribute discrimination process in Embodiment 1 of the present invention.
[Fig. 4] Fig. 4 is a flowchart showing the operation of a reliability index determination process for a main group in Embodiment 1 of the present invention.
[Fig. 5] Fig. 5 is a flowchart showing the operation of a reliability index determination process for a subgroup in the case of one subgroup in Embodiment 1 of the present invention.
[Fig. 6] Fig. 6 is a flowchart showing the operation of a reliability index determination process for a subgroup in the case where a plurality of subgroups are ranked by using the number of addresses in Embodiment 1 of the present invention.
[Fig. 7] Fig. 7 is a flowchart showing the operation of the display method determination process for the main group in Embodiment 1 of the present invention.
[Fig. 8] Fig. 8 is a flowchart showing an example of the operation of the display method determination process for a subgroup in Embodiment 1 of the present invention.
[Fig. 9] Fig. 9 is a flowchart showing an example of the operation of the display method determination process for the subgroup in Embodiment 1 of the present invention.
[Fig. 10] Fig. 10 is a view showing a list for each of individual destinations which are input by the user, in Embodiment 1 of the present invention.
[Fig. 11] Fig. 11 is a view showing a list in which the individual destinations that are grouped in an address book, in Embodiment 1 of the present invention.
[Fig. 12] Fig. 12 is a view showing a display example in the case where a destination address having different attribute information is contained, in Embodiments 1, 2, and 3 of the present invention.
[Fig. 13] Fig. 13 is a view showing a display example (the background color of the mail body text is changed to a checkered pattern) in the case where a destination address having different attribute information is contained, in Embodiments 1, 2, and 3 of the present invention.
[Fig. 14] Fig. 14 is a view showing a display example (the background color of the whole mail screen is changed to a checkered pattern) in the case where a destination address having different attribute information is contained, in Embodiments 1, 2, and 3 of the present invention.
[Fig. 15] Fig. 15 is a view showing a display example (the background color of the destination field is changed to a checkered pattern) in the case where a destination address having different attribute information is contained, in Embodiments 1, 2, and 3 of the present invention.
[Fig. 16] Fig. 16 is a view showing a display example (the background color of the destination field is changed) in the case where a destination address having different attribute information is contained, in Embodiments 1, 2, and 3 of the present invention.
[Fig. 17] Fig. 17 is a view showing a display example (the character color of a subgroup is changed) in the case where a destination address having different attribute information is contained, in Embodiments 1, 2, and 3 of the present invention.
[Fig. 18] Fig. 18 is a view showing an announcement by a ten-key pad in the case where a destination address having different attribute information is contained in the fourth rank, in Embodiments 1, 2, and 3 of the present invention.
[Fig. 19] Fig. 19 is a view showing a display and an announcement by a ten-key pad in the case where a destination address having different attribute information is contained in the fourth rank, in Embodiments 1, 2, and 3 of the present invention.
[Fig. 20] Fig. 20 is a flowchart showing the operation of an attribute discrimination process using a batch transmission/reception history in Embodiment 2 of the present invention.
[Fig. 21] Fig. 21 is a flowchart showing the operation of an attribute discrimination process using an individual transmission/reception history in Embodiment 2 of the present invention.
[Fig. 22] Fig. 22 is a flowchart showing the operation of an attribute discrimination process in Embodiment 3 of the present invention. Mode for Carrying Out the Invention

Hereinafter, modes for carrying out the present invention will be described with reference to the drawings. In all the figures illustrating the embodiments, identical components are denoted by the same reference numerals, and duplicated description is omitted.

### (Embodiment 1)

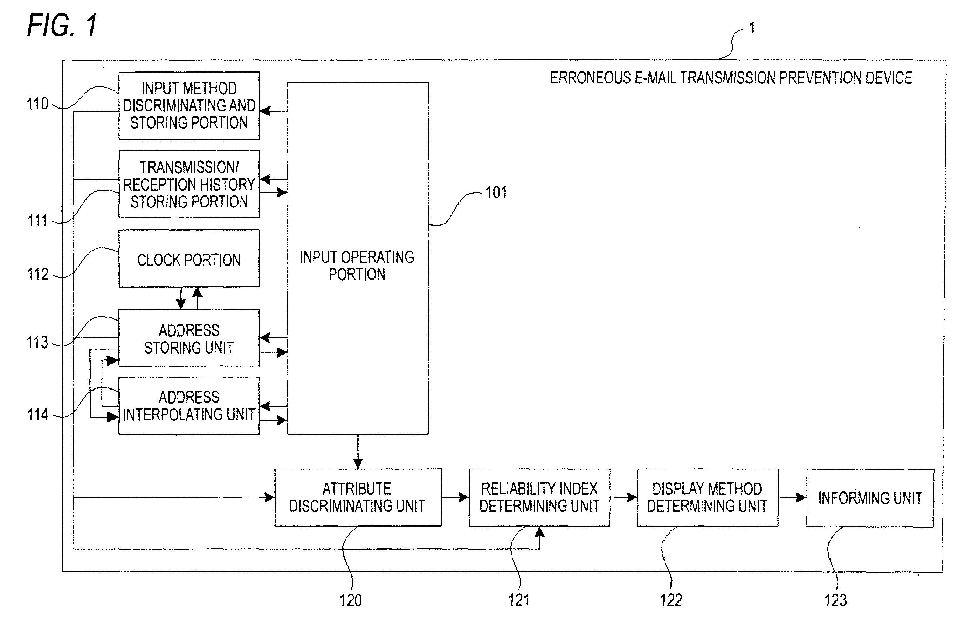

Fig. 1 is a block diagram schematically showing the configuration of an erroneous e-mail transmission prevention apparatus according to the embodiment.

An erroneous e-mail transmission prevention device 1 of the invention includes: an input operating portion 101 which is formed by a keyboard, a ten-key pad, a pointing device, and the like; an input method discriminating and storing portion 110 which stores a method of inputting an e-mail address; a transmission/reception history storing portion 111 which stores a history of past transmissions and receptions of mails; a clock portion 112 which measures the transmission/reception time of an e-mail; an address storing portion 113 which stores information such as an e-mail address; an address interpolating unit 114 which, when an e-mail address is to be input, performs a process of interpolating the input based on the mail address information stored in the address storing portion; an attribute discriminating unit 120 which discriminates attribute information of an input mail address (for example, information for discriminating the attribute of each mail address such as an address group to which the address belongs, and the domain name of the address); a reliability index determining unit 121 which, when mail addresses are classified into sets in accordance with certain attribute information, determines the reliability of each set; a display method of determining unit 122 which determines a method exhibiting the possibility of an erroneous setting of an e-mail address to the user; and an informing unit 123 which notifies an erroneous setting of an e-mail address to the user through a display screen or speaker of a personal computer or a portable communication terminal, generation of vibrations such as a vibrator, or the like.

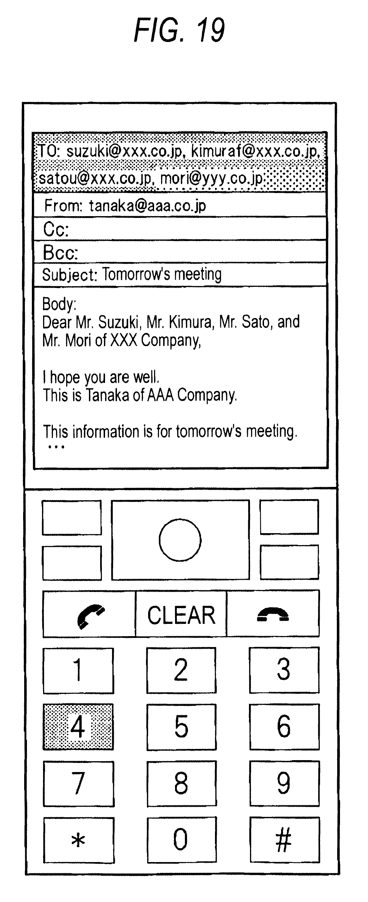

Next, Embodiment 1 of the invention will be described with reference to Figs. 1 to 19.

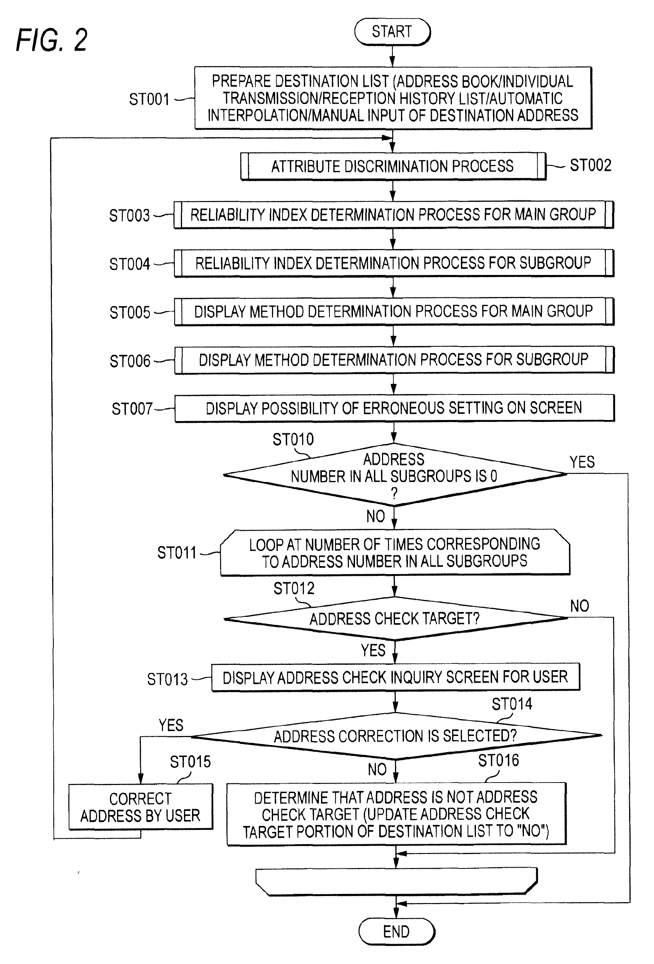

Fig. 2 is a flowchart showing the operation which is performed after the user performs an e-mail address input and until the erroneous e-mail transmission prevention apparatus of the invention extracts an address in which there is a possibility of an erroneous setting, exhibits it to the user, and promotes correction.

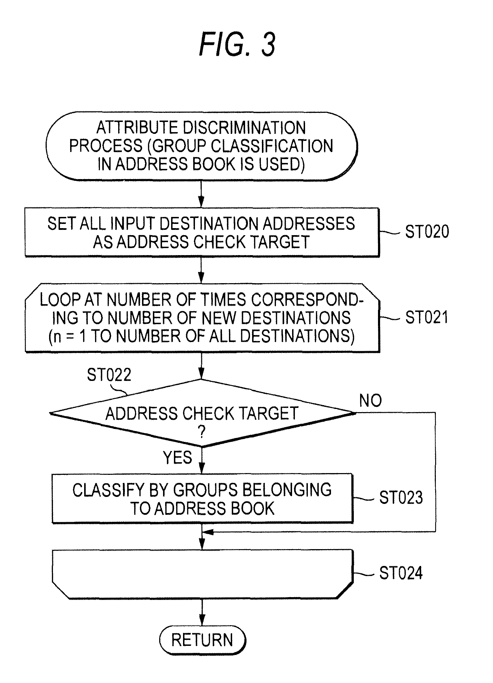

Figs. 3 to 9 are flowcharts showing in detail processes in the flowchart shown in Fig. 2.

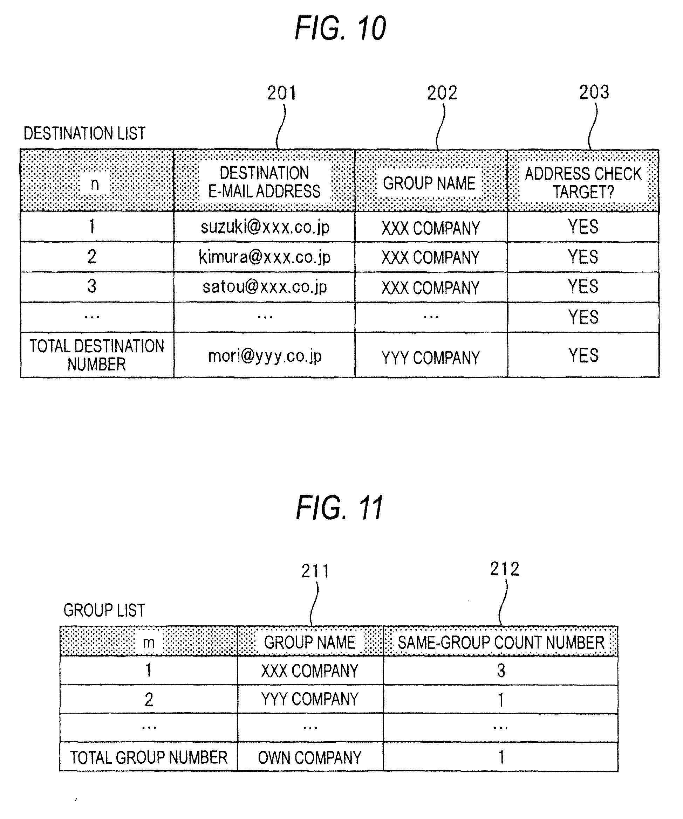

Figs. 10 and 11 show an example of a list which is used when an e-mail address that is input by the user is discriminated by using "group setting" of an address book provided in an e-mail transmitting and receiving apparatus as "attribute information".

First, a process of inputting an address (ST001) in Fig. 2 which is performed by the user and the erroneous e-mail transmission prevention apparatus of the invention through the input operating portion 101 of Fig. 1 will be described. Specifically, in order that the user performs mail transmission, the user writes the mail address (destination address) of the destination, into an address input field by using the input operating portion 101 shown in Fig. 1. At this time, as an input unit for inputting an address, the followings may be contemplated: selection from an address book stored in the address storing portion 113 through the input operating portion 101; selection from a transmission/reception history list stored in the transmission/reception history storing portion; entering of characters of the address by using, for example, the keyboard, or a ten-key pad equipped in a portable terminal or the like; the address interpolating unit 114 which, in the case where, when the initial character of the address or the initial and subsequent several characters are input, an address corresponding to the character(s) is already registered in the address book, automatically shows the remaining characters of the address as an candidate; or the like.

Next, an attribute discrimination process (ST002) which is shown in Fig. 2, which is performed in the attribute discriminating unit of Fig. 1, and which is applied on the input address is performed. Hereinafter, referring to Fig. 3, the case where "group" which classifies addresses in the address book is used as 'attribute information' of an e-mail address will be described.

First, as in an address check target item 203 shown in the destination list of Fig. 10, in order to set all input destination addresses as the address check target, "Address check target?" is set to "YES" (ST020). This is changed to "Address check is not performed" state in the case where, in the process described below, the user determines that "Not recognized as erroneously set address". With respect to each of the input addresses, while checking whether the address is the address check target or not, group information in the address book stored in the address storing portion 113 is referred, and addresses of each group are classified as one set (ST021, ST022, ST023). The group list of Fig. 11 shows a state where input addresses are tallied for each of the groups shown in Group name 211, and the number of mail addresses contained in each group is counted. (The count number is shown in Same-group count number 212 in Fig. 11.)
Next, a reliability index determination process which is performed in the reliability index determining unit 121 of Fig. 1 will be described.

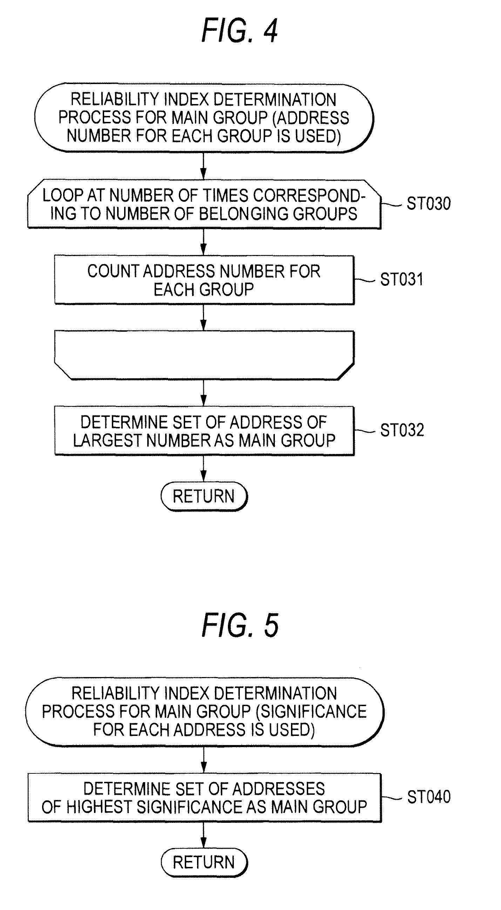

First, a reliability index determination process (ST003) for the main group in Fig. 2 that determines a set of addresses (hereinafter, such a set is referred as the main group) in which the possibility that the destination is erroneous is low, in mail address sets which have undergone the above-described attribute discrimination process will be described with reference to Fig. 4. In the process which will be described here, the mail address number (Same-group count number 212 in Fig. 11) for each group which is obtained in the above-described attribute discrimination process is used as the number indicating "Reliability (lowness of the possibility of an erroneous setting) of mail address set". As shown in Fig. 4, the mail address numbers for respective groups which are obtained for respective groups in the process of Fig. 3 are referred (ST030, ST031). Then, the group in which the mail address number is largest among the groups is determined as the main group (ST032).

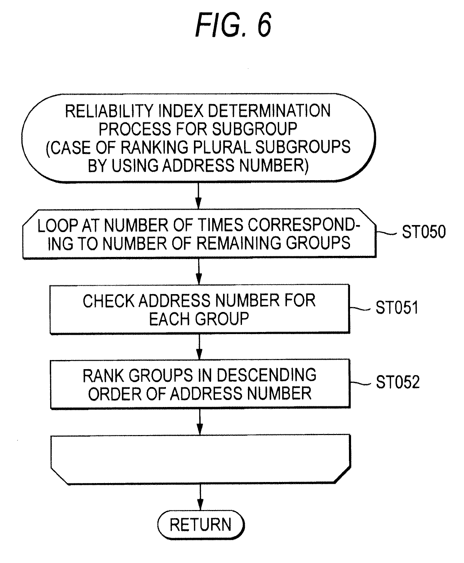

Moreover, a reliability index determination process for a subgroup which is shown in ST004 in Fig. 2, and in which a group which is not determined as the main group in the above-described process (a set of mail addresses in which the possibility that the destination is erroneous is high, hereinafter referred to as a subgroup) will be described with reference to Figs. 5 and 6. The process shown in Fig. 5 is a flowchart in the case where, even when there are a plurality of sets other than the main group, only one "subgroup" is set. In this case, all mail addresses which do not belong to the main group are determined as one subgroup (ST040). The process shown in Fig. 6 is a flowchart in the case where, when there are a plurality of sets other than the main group, a plurality of subgroups are set. In this case, among the remaining sets, the numbers of belonging mail addresses are compared to each other. The numbers of mail address belonging to the remaining groups are checked (ST050, ST051). It is considered that, as the mail address number is larger, the group is closer to the main group. Therefore, the subgroups are ranked in descending order of the mail address number (ST052).

With respect to the reliability index determination process for a subgroup which is shown in ST004 in Fig. 2, the user may be inquired for each process whether the subgroup number is set to one as shown in Fig. 5 or to a plural number as shown in Fig. 6. Alternatively, the user may previously set so that one of them to be selected, and the same process is performed until the user changes the setting. With respect to the attribute information and the reliability in the case where a plurality of subgroups are prepared and ranked, other attribute information and reliability which will be described later may be used.

Next, a display method determination process which is performed by the display method determining unit 122 in Fig. 1 will be described with reference to Figs. 2, 7, 8, and 9.

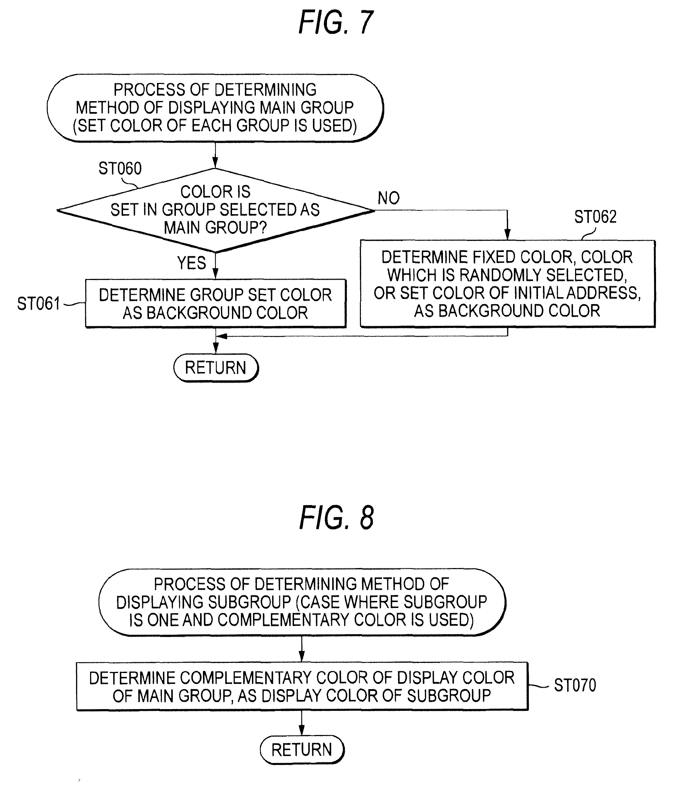

First, a display method determination process (ST005) for the main group in Fig. 2 in which a method of displaying the main group is determined will be described with reference to the flowchart of Fig. 7.

In the case where, for a group which is selected as the main group, "group set color" is set in the address book or the like (the case of YES in the branch of ST060), the group set color is used as the background color of the main group (ST061). In the case where "group set color" is not set in the address book or the like (the case of NO in the branch of ST060), a fixed color which is previously set by the user or the erroneous e-mail transmission prevention apparatus of the invention is determined as the background color, a color which is randomly selected is set as the background color, or, in the case where "set color" of the address which is described at the top as the destination is set in the address book or the like, the color is determined as the background color of the main group (ST062).

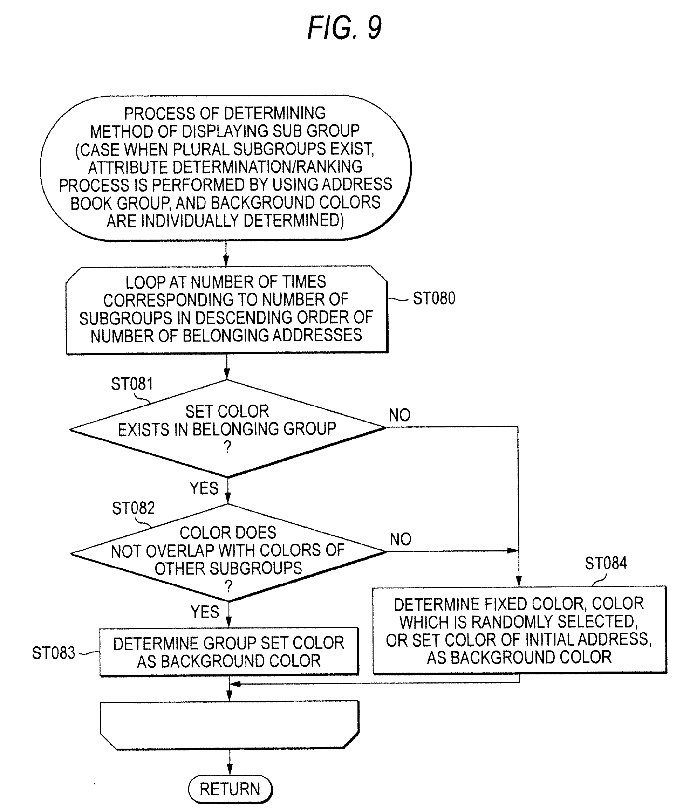

Moreover, a display method determination process (ST006) for a subgroup in Fig. 2 in which a method of displaying the subgroup is determined will be described with reference to the flowcharts of Figs. 8 and 9.

First, in the case of one subgroup, the display method is determined in the flow shown in Fig. 8. The complementary color of the background color of the main group is determined as the background color (ST070).

Although, in Fig. 8 and the foregoing description, the complementary color of the main group is set as the background color of the subgroup, a color which is randomly selected, and which is other than the background color of the main group, the set color of the group in the address book in which the mail address number is largest among the subgroups, or a fixed color which is set by the user may be set as the background color.

In the case where a plurality of subgroups exist, groups in the address book are used in attribute determination of the subgroups to rank the subgroups, and respective background colors are to be changed, the display method is determined in the flow shown in Fig. 9.

The following process is performed on subgroups in descending order of the number of mail addresses which belong to each subgroup (ST080). In the case where a group color is set in the address book to a group which is an object of the process (YES in the branch of ST081), and the color does not overlap with the background colors of other subgroups (ST082), the set color in the address book is determined as the background color (ST084). In the case a set color is not set in the address book to the subgroup of the process object (NO in the branch of ST081), or the case of the color which is already selected as the background color of another subgroup (NO in the branch of ST082), a fixed color which is previously determined by the user or the erroneous e-mail transmission prevention apparatus of the invention, a color which is randomly selected by the erroneous e-mail transmission prevention apparatus of the invention, or the set color of the initial address which is described in the subgroup that is the process object is selected as the background color of the subgroup.

Although, in Fig. 9 and the foregoing description, the process is performed in descending order of the number of mail addresses which belong to each subgroup, i.e., in descending order of the reliability, a color which is close to the complementary color of the background color of the main group may be set as the background color in ascending order of the subgroup rank (as the rank is lower among subgroups, the color is closer to the complementary color of the set color of the main group).

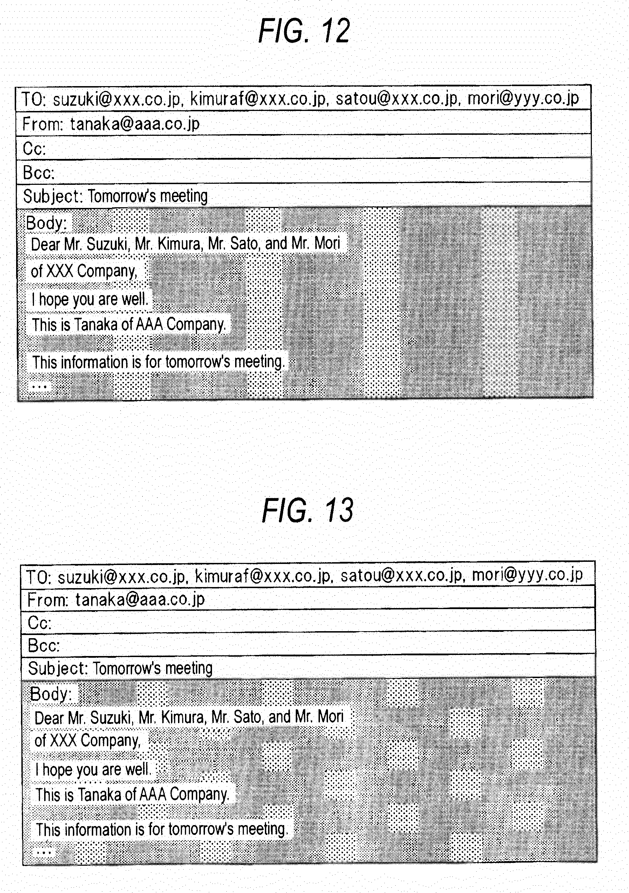

Moreover, the user may set so that, even when a plurality of subgroups exist, only one background color is used as a whole. In this case, similarly with the background color determination method in above-described "case of one subgroup", the complementary color of the background color of the main group, a color which is randomly selected, and which is other than the background color of the main group, the set color of the group in the address book in which the mail address number is largest among the subgroups, or a fixed color which is set by the user may be set as the background color. Next, operations of displaying the possibility of an erroneous setting on the screen (ST007) in Fig. 2 while using the informing unit 123 of Fig. 1 will be described with reference to Figs. 12 to 18. Figs. 12 to 17 show examples in which a destination that is determined that there is a possibility of an erroneous setting is contained in four new destinations, and specifically the fourth address has a possibility of an erroneous setting.

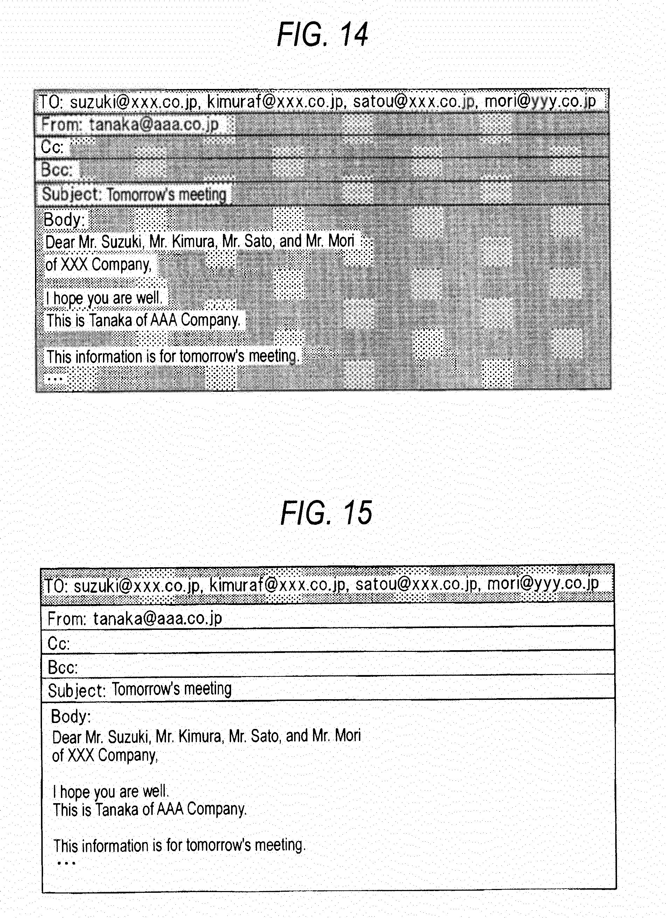

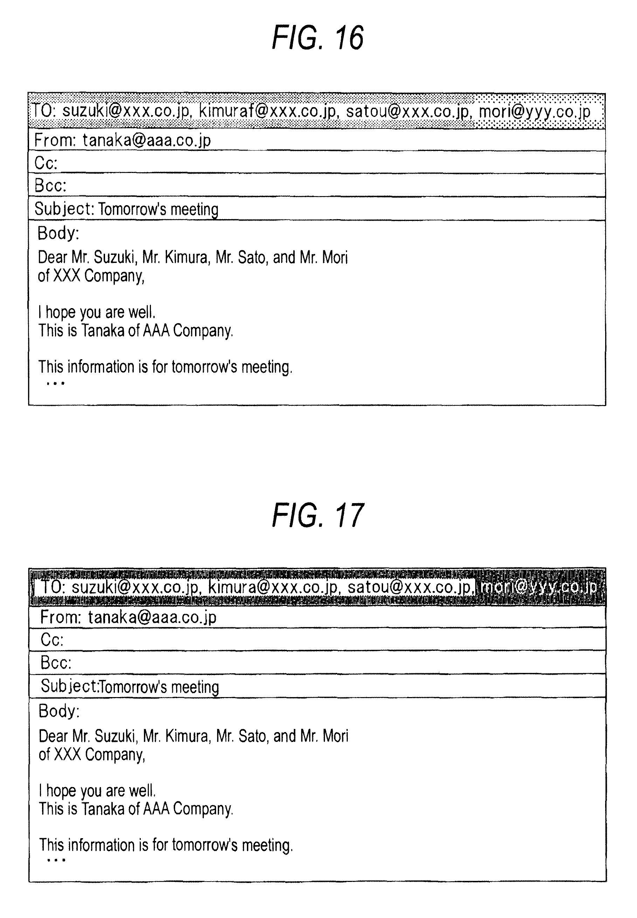

Fig. 12 shows an example in which the background color of the main group and that of a subgroup are displayed in an e-mail body text portion. In this example, the determined colors are expressed in a stripe pattern at a ratio of the number of addresses belonging to the main group to that of addresses belonging to the subgroup. In Fig. 13, the background color of the mail body text is expressed as a checkered pattern. The range where the background color is changed may be the whole of the mail screen as shown in Fig. 14, or the place other than the mail body text as shown in Fig. 15. Alternatively, as shown in Fig. 16, only the background portion of a character string of an e-mail address in which there is a possibility of an erroneous setting may be set to the background color of the subgroup, or, as shown in Fig. 17, an address in which there is a possibility of an erroneous setting may be displayed in the background color of the main group while the background color of the subgroup is set as the character color.

In the examples of Figs. 12 to 17, the case is shown where only one subgroup exists and therefore a total of two colors or one background color of the subgroup and one background color of the main group are displayed. As described in above-described "background color determination process for a subgroup", in the case where a plurality of subgroup exist and different background colors are set to the respective subgroups, however, three or more background colors are displayed on the informing unit 123, combined with the background color of the main group.

The background pattern and the combination of background colors are not limited to the contents described above, and may be selected so as to notify the relative color difference to the user by using two or more colors.

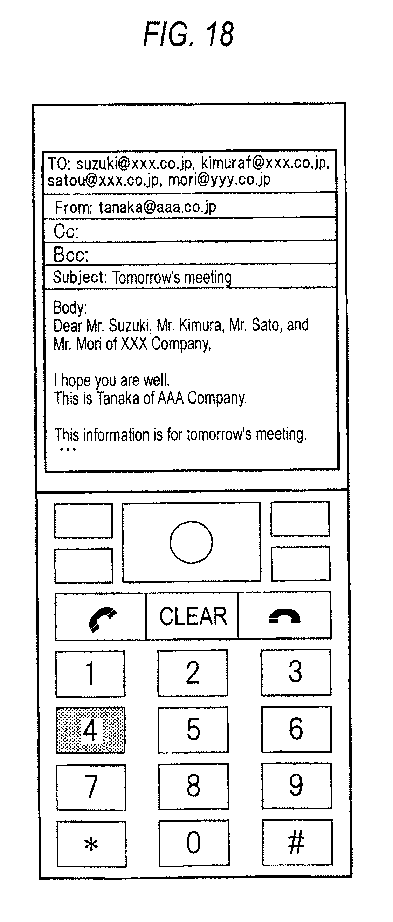

In the case where the invention is applied to an apparatus such as a portable terminal in which the background color of a ten-key pad can be changed, and an address in which there is a possibility of an erroneous setting exists, the ten-key pad may be blinked or always lit up. At this time, as shown in Fig. 18, the position of the key which is blinked or always lit up may correspond to the order of description of the address in which there is a possibility of an erroneous setting (in the case of Fig. 18, the fourth destination address has a high possibility of an erroneous setting, and therefore "number 4 key" in the ten-key pad is lit up), or random keys may be lit up or blinked. In this case, moreover, this operation may be conducted simultaneously with the operation of changing the background color of the mail creation screen which has been described with reference to Figs. 12 to 17.

Next, a process after the displaying of the main group and subgroups will be described with reference to Fig. 2.

In the case where there is an e-mail address(es) which is classified as a subgroup (NO in the branch of ST010), the following process is performed a number of times corresponding to the number of the addresses (ST011).

It is determined whether or not the mail address is an e-mail address in which it is discriminated that there is a possibility of an erroneous setting, by the method of the invention, and a determination of "it is determined that that there is a possibility of an erroneous setting, but the mail address is not erroneously set" is not conducted, i.e., whether, in the address of the process object, the portion of "Address check target" in the address check target item 203 in Fig. 10 is "YES" or not (ST012). If "Address check target" is "YES" (YES in the branch of ST012), the user is promoted to determine that "the mail address is erroneously set, and hence the mail address is deleted or changed" or "the mail address is not erroneously set, and hence the mail address is removed from the address check target" (ST013).

If the user selects "address correction" (YES in the branch of ST014), the user is requested to correct the address (ST105). Thereafter, the attribute discrimination process (ST002) using the new address is again performed.

If, in the inquiry process of ST013, the user does not select "address correction", i.e., it is determined that "the mail address is not erroneously set, and hence the mail address is removed from the address check target" (NO in the branch of ST014), the state of the address in the column 203 in Fig. 10 is set to "NO" (ST016), the address is removed from the subsequent address check target, and the process returns to the user check process (ST012) for the next address.

The above-described process is performed on all addresses of all subgroups. At the timing when an address which is determined as "erroneous setting" does not finally exist, i.e., that when the number of addresses which are classified as a subgroup is zero (YES in the branch of ST010), the whole process is ended.

In the above description of the operation, "group classification in the address book" is used as the attribute information in the attribute discrimination process. In the case where a value indicating significance for each address is stored in address book data stored in the address string portion, this "significance" may be used as attribute information, and then destination mail addresses may be distributed.

In the case where, as the attribute information in the address classification, information indicating whether transmission and reception of an e-mail are free of charge or not (including not only direct information indicating whether transmission and reception are charged or free of charge, but also a determination of the mail transmission time which can be made by referring to the domain of an e-mail address or the clock portion 112 in Fig. 1) is stored in the address book stored in the address storing portion, this "information of free of charge/charging of transmission/reception" may be used as attribute information, and then destination mail addresses may be distributed.

In the above description of the operation, "number of destination mail addresses which are distributed to each group after the classification to groups in the address book" is used in the reliability index determination process of the main group and that of a subgroup after the destination mail address classification due to attribute information. Alternatively, "significance of each mail address" may be used. When a group of the highest significance is set as the main group, and subgroups are ranked, a group of a higher significance is set as a subgroup of a higher rank.

Moreover, "information of free of charge/charging of transmission/reception of an e-mail" may be used in the reliability index determination process of the main group. In this case, an address group in which transmission and reception of an e-mail are free of charge is determined as the main group.

In the above description of the operation, in the case where there is a possibility of an erroneous setting in destination e-mail addresses, the possibility of an erroneous setting of an e-mail address is notified to the user by changing the color of the screen, the ten-key pad, or the like. Here, the possibility of an erroneous setting of an address may be notified to the user not only by above-described change of the color of the screen or the ten-key pad, but also by a sound which is generated by the speaker or the like.

In place of the above-described color and sound, in an apparatus which has a vibrator function, a mode in which the possibility of an erroneous setting of an address is notified to the user by vibrations produced by the vibrator may be employed.

### (Embodiment 2)

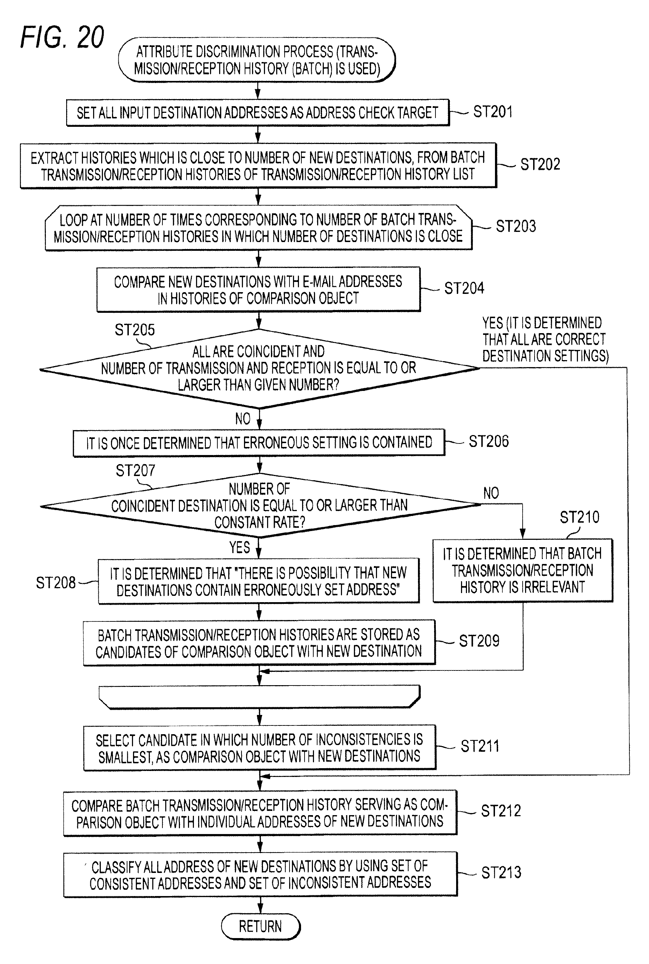

Next, Embodiment 2 (a method using a transmission/reception history) of the invention will be described with reference to Figs. 1, 2, 20, 21, and 22. Fig. 20 is a flowchart showing in detail the operation of the attribute discrimination process (ST002) of Fig. 2 in Embodiment 2.

All histories in which one e-mail is transmitted to or received from a plurality of destinations (hereinafter, referred to as a batch transmission/reception history) are selected from transmission/reception histories stored in the transmission/reception history storing portion 111 shown in Fig. 1. Among them, batch transmission/reception histories in which, in an e-mail to be newly transmitted, the number of new destinations of the e-mail is equal or close to the destination number are extracted (ST202). Next, the following address check process is performed a number of times equal to the number of the extracted batch transmission/reception histories (ST203). First, the address group remaining as a batch transmission/reception history is compared with the new destinations (ST204). If all the destinations coincide and the number of past transmissions and receptions is not smaller than a given number (YES in the branch of ST205), it is determined that all the new destinations are correct (erroneous transmission is not performed) destinations, and a subsequent check of the batch transmission/reception history address group is not conducted. If, as a result of performing the address comparison process (ST204), the address group remaining as a batch transmission/reception history does not coincide with the new destinations, or, even when all are coincident, the number of transmissions and receptions is less than the given number (NO in the branch of ST205), it is once determined that there is a possibility that the new destinations contain an erroneously set address (ST206). Thereafter, it is determined whether the number of the coincident destinations is equal to or larger than a constant rate or not (ST207). If the number of the coincident destinations is equal to or larger than the constant rate (YES in the branch of ST207), it is determined that "there is a possibility that the new destinations contain an erroneously set address" (ST208), and the batch transmission/reception histories functioning as the comparison object are stored as candidates of "batch transmission/reception history which is an object of comparison with a new destination" (ST209). If the number of the coincident destinations is less than the constant rate (NO in the branch of ST206), the history is determined that it is a batch transmission/reception history which does not contain an erroneously set address, and which is not totally related to the new destinations (ST210).

By the above-described process, from past batch transmission/reception histories, histories in which contents of destinations are close to the new destinations, but several inconsistent addresses exit can be extracted. In the extracted histories, a history in which the number of inconsistencies is smallest is set as the final comparison object (ST211).

Moreover, the batch transmission/reception history address which is set as the comparison object is compared with the new destinations (ST212), and the new destinations are classified by using the attribute which is a consistent address and attribute information which is an inconsistent address (ST213).

In the above description, all batch transmission/reception histories which remain in the transmission/reception history portion are used. Alternatively, only batch transmission/reception histories after a given date/time may be used, or only those in which the number is not larger than a constant number may be used.

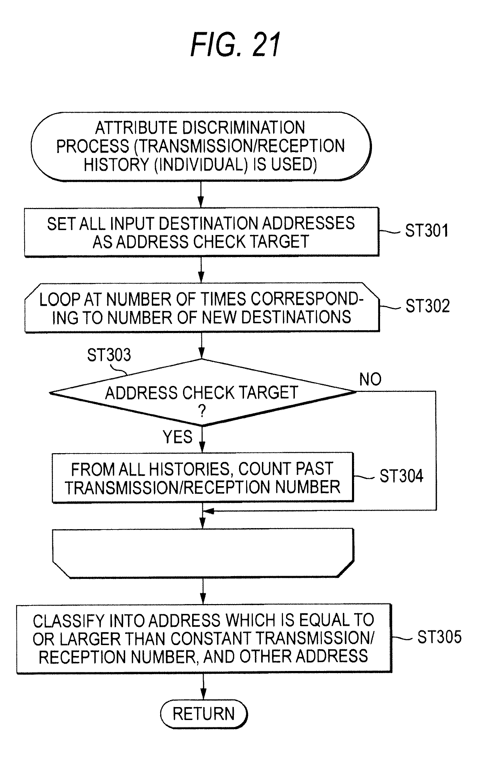

In the above-described process, histories (batch transmission/reception histories) in which one e-mail is transmitted to or received from a plurality of destinations are used in the attribute determination. Alternatively, the transmission/reception history of an individual address (hereinafter, referred to as the individual transmission/reception history) may be used in the attribute determination. The operation in this case will be described with reference to Fig. 21.

With respect to an e-mail address which is input as a new destination, it is checked whether the e-mail address is the address check target or not (ST303). With respect to an address which is the address check target, all individual transmission/reception histories are referred, and the number of times at which the address is used as the transmission address or the reception address is counted (ST304). Thereafter, the e-mail addresses of new destinations are classified in accordance with attributes such as "equal to or larger than a constant transmission/reception number" and "smaller than the constant transmission/reception number" (ST305).

In the attribute determination after the number of transmission/reception histories for each new destination is counted, not only "equal to or larger than a constant transmission/reception number", attribute information of "the transmission/reception history is largest among new destinations" and "other e-mail address" may be used, or attribute information of "a constant number of higher order addresses" and "lower order addresses" in the case where new destinations are arranged in descending order of the number of transmission/reception histories may be used.

In the above-described attribute determination using individual transmission/reception histories, all individual transmission/reception histories are used. Alternatively, only individual transmission/reception histories after a given date/time may be used, or only those in which the number is not larger than a constant number may be used.

Next, the reliability index determination process (ST003) for the main group in Fig. 2 in the case where transmission/reception histories are used will be described.

In the reliability index determination process in the case where batch transmission/reception histories are used in the above-described attribute discrimination process, a set of addresses which, among addresses of new destinations, are consistent with addresses in the batch transmission/reception history address group serving as the comparison object is determined as the main group.

In the reliability index determination process in the case where individual transmission/reception histories are used in the above-described attribute discrimination process, above-described "addresses in which the transmission/reception number is equal to or larger than a constant number", "addresses in which the transmission/reception history is largest among new destinations", or "lower order addresses in the case where new destinations are arranged in descending order of the number of transmission/reception histories" is determined as the main group.

Next, the reliability index determination process (ST004) for a subgroup which is shown in Fig. 2, and in which determination of a subgroup (a set of addresses in which the possibility that the destination is erroneous is high) that is not determined as the main group in the above-described process is performed will be described.

In the case where the attribute discrimination process using the above-described batch transmission/reception histories or individual transmission/reception histories, and the main-group determination process using a result of the process are performed, only one set exists other than the main group. The set is determined as "subgroup".

Next, a display method determination process which is performed by the display method determining unit 122 in Fig. 1 will be described with reference to Figs. 2, 7, and 8.

A process of determining a method of displaying the main group (the display method determination process ST005 for the main group in Fig. 2) operates in the same manner as the process which has been described in Embodiment 1, and hence will be described with reference to the flowchart of Fig. 7 similarly with Embodiment 1.

In the case where, for a group which is selected as the main group, "group set color" is set in the address book or the like (the case of YES in the branch of ST060), the group set color is used as the background color of the main group (ST061). In the case where "group set color" is not set in the address book or the like (the case of NO in the branch of ST060), a fixed color which is previously set by the user or the erroneous e-mail transmission prevention apparatus of the invention is determined as the background color, a color which is randomly selected is set as the background color, or, in the case where "set color" of the address which is described at the top as the destination is set in the address book or the like, the color is determined as the background color of the main group (ST062).

Moreover, a display method determination process (ST006) for a subgroup in Fig. 2 in which a method of displaying the subgroup is determined will be described. In the main-group and subgroup determination method which is described in Embodiment 2, only one main group and only one subgroup exist. Therefore, a display method determining unit for the subgroup in Embodiment 2 operates in a similar manner as "display method determining unit in the case of one subgroup" which has been described in Embodiment 1, and hence the same process as described with reference to the flowchart of Fig. 8 is performed. Specifically, the complementary color of the background color of the main group is determined as the background color (ST070).

Although, in Fig. 8 and the foregoing description, the complementary color of the main group is set as the background color of the subgroup, a color which is randomly selected, and which is other than the background color of the main group, the set color of the group in the address book in which the e-mail address number is largest among the subgroups, or a fixed color which is set by the user may be set as the background color.

Next, with respect to the manner of, by the informing unit of Fig. 2, informing the user of the above-determined possibility of erroneous setting of an e-mail destination, and the method of displaying it, its description here is omitted because the operation is similar to that described in Embodiment 1.

In the case where the invention is applied to an apparatus such as a portable terminal in which the background color of a ten-key pad can be changed, and an address in which there is a possibility of an erroneous setting exists, the ten-key pad may be blinked or always lit up. The specific operation is similar to that described in Embodiment 1, and hence its description here is omitted.

Moreover, also the process after the displaying of the main group and the subgroup is similar to that described in Embodiment 1, and hence its description here is omitted.

In the above description of the operation, in the case where there is a possibility of an erroneous setting in destination e-mail addresses, moreover, the possibility of an erroneous setting of an address is notified to the user by changing the color of the screen, the ten-key pad, or the like. Here, the possibility of an erroneous setting of an address may be notified to the user not only by the above-described change of the color of the screen or the ten-key pad, but also by a sound which is generated by the speaker or the like.

In place of the above-described color and sound, in an apparatus which has a vibrator function, a mode in which the possibility of an erroneous setting of an address is notified to the user by vibrations produced by the vibrator may be employed.

### (Embodiment 3)

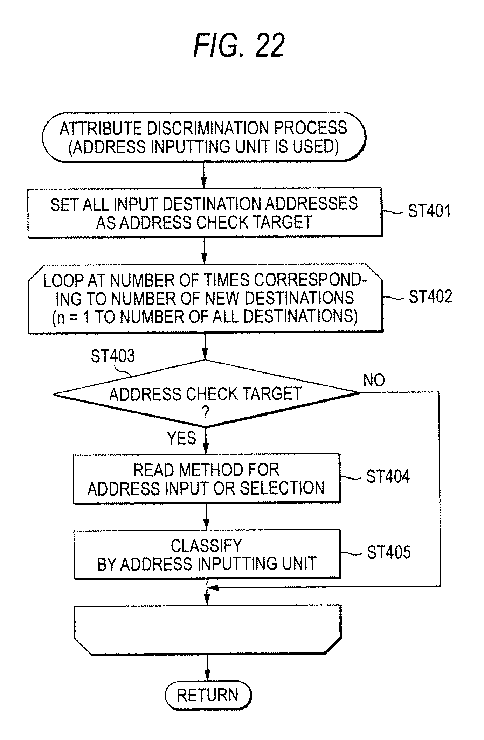

Next, Embodiment 3 (the attribute determination by using an address inputting unit) of the invention will be described with reference to Figs. 1, 2, and 22. Fig. 22 is a flowchart showing in detail the attribute discrimination process of Fig. 2.

First, the following process is performed on all new destination addresses.

In the case where a corresponding new address is "address check target" (YES in the branch of ST403), the input method which is stored in the input method discriminating and storing portion 110, and which is performed when the user inputs or selects new destination addresses is read out (ST404). The new destination addresses are distributed by the input method (ST405).

In the case where the corresponding new address is not "address check target" (NO in the branch of ST403), the following process is performed on the new address.

As the input method, here, the followings may be contemplated: a method in which the user inputs an address from address book information stored in the address storing portion 113; that in which the user selects all or a part of addresses contained in a batch transmission/reception history list or individual transmission/reception history list stored in the transmission/reception history storing portion 111; that in which all or a part of destinations which are automatically set as a destination when the user performs an operation of replying to a received e-mail are selected; that in which the user directly inputs an address in the destination field by using the keyboard, ten-key pad, pointing device, or the like which is disposed in the input operating portion 101; and that in which an address is input as a new address by using an address interpolating unit which refers the address storing portion to, with respect to one character or plurality of character strings that are input by the input operating portion, show the user an e-mail address having the character string as an e-mail address candidate.

Next, the reliability index determination process (ST003) for the main group in Fig. 2 in the case where the address inputting unit is used will be described.

A set of e-mail addresses which, among addresses that, as a result of the attribute discrimination using the address inputting unit, are distributed by the address inputting unit, are input by an inputting unit of the highest reliability is set as the main group.

With respect to the unit which has "highest reliability", a unit which is previously set by the user or the erroneous e-mail transmission prevention apparatus of the invention is assumed to have "highest reliability". The unit having "highest reliability" may be singular or plural. In the case where the user selects "input from the address book information" as an inputting unit of the highest reliability, for example, a set of addresses "input from the address book information" is set as the main group.

Next, the reliability index determination process (ST004) for a subgroup which is shown in Fig. 2, and in which determination of a subgroup (a set of addresses which are not determined as the main group in the above-described process, and in which the possibility that the destination is erroneous is high) is performed will be described.

In the case where, when there are a plurality of sets other than the main group, only one "subgroup" is set, all e-mail addresses which do not belong to the main group are determined as one subgroup.

In the case where there are a plurality of sets other than the main group and they are contemplated as a plurality of subgroups, the reliability comparison of address inputting units is performed among the remaining sets. Specifically, input units of individual sets are checked, "difficulty of erroneous setting in inputting of the e-mail address" is considered as the reliability, and subgroups are ranked in descending order of the reliability. "Difficulty of erroneous setting in inputting of the e-mail address" may be predetermined by the erroneous e-mail transmission prevention apparatus of the invention, or set by the user.

For example, in the case where the address input method is set by the user in descending order of reliability as "input from the address book information", "method in which all or a part of destinations which are automatically set as a destination in an operation of replying to a received e-mail are selected", "selection from the transmission/reception history", and "method in which in which the user directly inputs an address in the destination field by using the keyboard, ten-key pad, pointing device, or the like which is disposed in the input operating portion 101", the rank of the subgroups is determined in accordance with this rank.

With respect to the reliability index determination process for a subgroup which is shown in ST004 in Fig. 2, the user may be inquired for each process whether the subgroup is set to one or to a plural number. Alternatively, the user may previously set so that one of them to be selected, and the same process is performed until the user changes the setting, or the selection may be performed in accordance with the method which is previously selected by the erroneous e-mail transmission prevention apparatus of the invention. With respect to the attribute and the reliability in the case where a plurality of subgroups are prepared and ranked, another attribute information and reliability which has been described above may be used.

A set other than the set of addresses that, among addresses which are distributed by the address inputting unit, are determined as the main group in the above-described reliability index determination process for the main group as a result of the attribute discrimination using the address inputting unit is determined as a subgroup. In the case where the subgroup is set to one, even when, other than the main group, sets of addresses having different attribute information exist, all e-mail addresses contained therein are bundled and determined as one subgroup.

In the case where the subgroup is set to a plural number, when, other than the main group, sets of addresses having different attribute information exist, the individual sets are determined as different subgroups. In this case, the subgroups are ranked in accordance with the attribute reliability. The attribute rank follows the rank which is previously set by the user or the erroneous e-mail transmission prevention apparatus of the invention.

The selection whether the subgroup is set to one or to a plural number follows the method which is previously set by the user or the erroneous e-mail transmission prevention apparatus of the invention.

The display method determination process for the main group shown in Fig. 2 in which a method of displaying the main group is determined is identical with the process for the main group which has been described in Embodiment 2, and hence its description is omitted.

Furthermore, the display method determination process for a subgroup in Fig. 2 in which a method of displaying a subgroup is determined is identical with the process for a subgroup which has been described in Embodiment 2, and hence its description is omitted.

Moreover, with respect to the manner of, by the informing unit shown in Fig. 2, informing the user of the above-determined possibility of erroneous setting of an e-mail destination, and the method of displaying it, its description here is omitted because the operation is similar to that described in Embodiment 1.

In the case where the invention is applied to an apparatus such as a portable terminal in which the background color of a ten-key pad can be changed, and an address in which there is a possibility of an erroneous setting exists, the ten-key pad may be blinked or always lit up. The specific operation is similar to that described in Embodiment 1, and hence its description here is omitted.

Moreover, also the process after the displaying of the main group and the subgroup is similar to that described in Embodiment 1, and hence its description here is omitted.

In the above description of the operation, in the case where there is a possibility of an erroneous setting in destination e-mail addresses, the possibility of an erroneous setting of an e-mail address is notified to the user by changing the color of the screen, the ten-key pad, or the like. Here, the possibility of an erroneous setting of an e-mail address may be notified to the user not only by the above-described change of the color of the screen or the ten-key pad, but also by a sound which is generated by the speaker or the like.

In place of the above-described color and sound, in an apparatus which has a vibrator function, a mode in which the possibility of an erroneous setting of an e-mail address is notified to the user by vibrations produced by the vibrator may be employed.

Although the invention has been described in detail and with reference to the specific embodiments, it is obvious to those skilled in the art that various changes and modifications can be made without departing from the spirit and scope of the invention.
The application is based on Japanese Patent Application No. 2009-121653 filed May 20, 2009, and its disclosure is incorporated herein by reference.

### Industrial Applicability

As clarified by the foregoing description, when a plurality of e-mail addresses are set in the destination field of an e-mail, the erroneous e-mail transmission prevention apparatus of the invention classifies the e-mail addresses in accordance with "attribute information" of the individual addresses, and obtains reliability indexes with respect to sets of the classified e-mail addresses. By using its result, the sets are divided into a set of destination address which seem to be correct, and a set of addresses having a possibility of error. The difference is exhibited to the visual sense, the auditory sense, or the like of the user who creates the e-mail, thereby producing an effect that it causes the user to notice the erroneous setting of the e-mail address. Therefore, the invention is useful in an electronic apparatus installed with a program having functions of creating an e-mail and transmitting and receiving an e-mail, such as a personal computer and a communication terminal such as a portable telephone.

### Description of Reference Numerals and Signs

- 1: erroneous e-mail transmission prevention apparatus
- 101: input operating portion
- 110: input method discriminating and storing portion
- 111: transmission/reception history storing portion
- 112: clock portion
- 113: address storing portion
- 114: address interpolating unit
- 120: attribute discriminating unit
- 121: reliability index determining unit
- 122: display method determining unit
- 123: informing unit

## Claims

1. A device for preventing erroneous e-mail transmission in an e-mail transmitting and receiving apparatus, comprising:
an address storing portion which stores a plurality of e-mail addresses;
an input operating portion in which, during e-mail creation, a plurality of destination addresses are input;
an attribute discriminating unit which discriminates attribute information of the plurality of destination addresses while referring to the address storing portion; and
an informing unit,
wherein when the attribute discriminating unit discriminates that a destination address having different attribute information exists in the plurality of destination addresses, the informing unit provides a user that an unusual setting is contained.

2. The device for preventing erroneous e-mail transmission according to claim 1, wherein the attribute discriminating unit discriminates whether the attribute information is identical with grouping information stored in the address storing portion or not.

3. The device for preventing erroneous e-mail transmission according to claim 1, further comprising:
a transmission/reception history storing portion which correspondingly stores addresses of e-mails that have been transmitted or received, and transmission/reception times of the e-mails,
wherein the attribute discriminating unit discriminates whether the plurality of destination addresses are respectively e-mail addresses that have been transmitted or received or not, as the attribute information.

4. The device for preventing erroneous e-mail transmission according to claim 1, wherein the attribute discriminating unit discriminates significance of each group in the address storing portion, as the attribute information.

5. The device for preventing erroneous e-mail transmission according to claim 1, wherein the attribute discriminating unit discriminates significance of each e-mail address in the address storing portion, as the attribute information.

6. The device for preventing erroneous e-mail transmission according to claim 1, further comprising:
an input method discriminating and storing portion which stores input methods, the input methods indicating ways how the user has inputted the plurality of destination addresses which are set as destinations,
wherein the attribute discriminating unit discriminates each of the input methods corresponding to the destination addresses, as the attribute information.

7. The device for preventing erroneous e-mail transmission according to claim 1, wherein the attribute information is a distinction between charging and free of charge of transmission and reception in a setting corresponding to an e-mail address in the address storing portion.

8. The device for preventing erroneous e-mail transmission according to claim 1, further comprising:
a reliability index determining unit which, based on a result of the determination of the attribute discriminating unit with respect to the plurality of destination addresses, determines a group in which a number of addresses having same attribute information is largest, as a main group, and determines a group which is otherwise, as a subgroup,
wherein if it is determined that the subgroup exists, the reliability index determining unit further determines all e-mail addresses which do not belong to the main group, as one subgroup; and
wherein the informing unit announces that a subgroup exists.

9. The device for preventing erroneous e-mail transmission according to claim 2, further comprising:
a reliability index determining unit which, based on a result of the determination of the attribute discriminating unit with respect to the plurality of destination addresses, determines a group in which a number of addresses having same attribute information is largest, as a main group, and determines a group which is otherwise, as a subgroup,
wherein if the reliability index determining unit determines that the subgroup exists, the attribute discriminating unit discriminates e-mail addresses other than the main group with respect to attribute information to classify the e-mail addresses into a plurality of subgroups, and ranks the subgroups in descending order of a number of e-mail addresses which belong to each of the subgroups; and
wherein the informing unit announces that the plurality of subgroups exist.

10. The device for preventing erroneous e-mail transmission according to claim 4 or 5, wherein in accordance with the significance of each address group or e-mail address, the reliability index determining unit determines the address group or e-mail address in which highest significance is set, as a main group, and determines an address group or e-mail address which is other than the main group, as a subgroup; and
wherein if it is determined that the subgroup exists, the informing unit announces that a subgroup exists.

11. The device for preventing erroneous e-mail transmission according to claim 4 or 5, wherein in accordance with the significance of each address group or e-mail address, the reliability index determining unit determines the address group or e-mail address in which highest significance is set, as a main group, and determines an address group or e-mail address which is other than the main group, as a subgroup;
wherein if it is determined that the subgroup exists, the attribute discriminating unit discriminates e-mail addresses other than the main group with respect to attribute information to classify the e-mail addresses into a plurality of subgroups, and ranks the subgroups in accordance with address groups contained in the subgroups or the significance; and
wherein the informing unit announces that the plurality of subgroups exist.

12. The device for preventing erroneous e-mail transmission according to claim 6, further comprising:
a reliability index determining unit which, based on a result of the discrimination of the attribute information, determines an e-mail address which is input by a first address input method that is previously set by the device for preventing erroneous e-mail transmission or the user, as a main group, and determines an e-mail address which is other than the main group, as a subgroup; and
wherein if it is determined that the subgroup exists, the reliability index determining unit determines an e-mail address which is other than the main group, as a subgroup, and, if it is determined that the subgroup exists, the informing unit announces that the subgroup exists.

13. The device for preventing erroneous e-mail transmission according to claim 6, further comprising:
a reliability index determining unit which, based on a result of the discrimination of the attribute information,
determines an e-mail address which is input by a first address input method that is previously set by the device for preventing erroneous e-mail transmission or the user, as a main group, and determines an e-mail address which is other than the main group, as a subgroup;
wherein if the reliability index determining unit determines that the subgroup exists, the attribute discriminating unit discriminates e-mail addresses other than the main group with respect to attribute information to classify the e-mail addresses into a plurality of subgroups, and ranks the subgroups in accordance with an address input method in which the user previously sets a rank, and the informing unit announces that the plurality of subgroups exist.

14. The device for preventing erroneous e-mail transmission according to claim 6, wherein the method of inputting the plurality of destination addresses is any one of:
a method in which address data stored in the address storing portion are referred and selected to be input as a new address;
a method in which an address is input one character by one character as a new address by the input operating portion;
a method in which one character or plurality of character strings that are input by the input operating portion is input as a new address by an address interpolating unit that refers the address storing portion to provide the user an e-mail address having the character string as an address candidate; and
a method in which an address stored in the transmission/reception history storing portion is selected to be input as a new address.

15. The device for preventing erroneous e-mail transmission according to claim 7, further comprising:
a reliability index determining unit which, based on a result of the discrimination of the attribute discriminating unit, determines a group in which e-mail transmission and reception are free of charge, as a main group, and determines a group which is other than the main group, as a subgroup; and
wherein when the subgroup exists, the informing unit announces that the subgroup exists.

16. The device for preventing erroneous e-mail transmission according to claim 1, wherein the informing unit is a displaying portion; and
wherein when the attribute discriminating unit discriminates that a destination address having a different attribute is contained, announcement is performed by displaying a color difference of two more colors on the displaying portion.

17. The device for preventing erroneous e-mail transmission according to claim 1, wherein the informing unit is a speaker; and
wherein when the attribute discriminating unit discriminates that a destination address having a different attribute is contained, announcement is performed by outputting a sound from the speaker.

18. The device for preventing erroneous e-mail transmission according to claim 1, wherein the informing unit is a vibrating portion; and
wherein when the attribute discriminating unit discriminates that a destination address having a different attribute is contained, announcement is performed by vibrations of the vibrating portion.

19. The device for preventing erroneous e-mail transmission according to claim 1, wherein the address storing portion stores one or a plurality of e-mail addresses while classifying into groups, and, for each of the groups, store a value, set color, or set sound which indicates significance of the group is stored in correspondence with the group.

## Amended claims

### Amended claims under Art. 19.1 PCT

**1.** (Amended) A device for preventing erroneous e-mail transmission in an e-mail transmitting and receiving apparatus, comprising:
an address storing portion which stores a plurality of e-mail addresses;
an input operating portion in which, during e-mail creation, a plurality of destination addresses are input;
an attribute discriminating unit which discriminates attribute information of the plurality of destination addresses while referring to the address storing portion;
an informing unit; and
an input method discriminating and storing portion which stores input methods, the input methods indicating ways how the user has inputted the plurality of destination addresses which are set as destinations,
wherein the attribute discriminating unit discriminates each of the input methods corresponding to the destination addresses, as the attribute information; and
wherein when the attribute discriminating unit discriminates that a destination address having different attribute information exists in the plurality of destination addresses, the informing unit provides a user that an unusual setting is contained.

**2.** (Amended) The device for preventing erroneous e-mail transmission according to claim 1, further comprising:
a reliability index determining unit which, based on a result of the discrimination of the attribute information, determines an e-mail address which is input by a first address input method that is previously set by the device for preventing erroneous e-mail transmission or the user, as a main group, and determines an e-mail address which is other than the main group, as a subgroup; and
wherein if it is determined that the subgroup exists, the reliability index determining unit determines an e-mail address which is other than the main group, as a subgroup, and, if it is determined that the subgroup exists, the informing unit announces that the subgroup exists.

**3.** (Amended) The device for preventing erroneous e-mail transmission according to claim 1, further comprising:
a reliability index determining unit which, based on a result of the discrimination of the attribute information,
determines an e-mail address which is input by a first address input method that is previously set by the device for preventing erroneous e-mail transmission or the user, as a main group, and determines an e-mail address which is other than the main group, as a subgroup;
wherein if the reliability index determining unit determines that the subgroup exists, the attribute discriminating unit discriminates e-mail addresses other than the main group with respect to attribute information to classify the e-mail addresses into a plurality of subgroups, and ranks the subgroups in accordance with an address input method in which the user previously sets a rank, and the informing unit announces that the plurality of subgroups exist.

**4.** (Amended) The device for preventing erroneous e-mail transmission according to claim 1, further comprising:
a transmission/reception history storing portion which correspondingly stores addresses of e-mails that have been transmitted or received, and transmission/reception times of the e-mails,
wherein the input method discriminating and storing portion stores as the method of inputting the destination address is any one of:
a method in which address data stored in the address storing portion are referred and selected to be input as a new address;
a method in which an address is input one character by one character as a new address by the input operating portion;
a method in which one character or plurality of character strings that are input by the input operating portion is input as a new address by an address interpolating unit that refers the address storing portion to provide the user an e-mail address having the character string as an address candidate; and
a method in which an address stored in the transmission/reception history storing portion is selected to be input as a new address.

**5.** (Deleted)

**6.** (Deleted)

**7.** (Deleted)

**8.** (Deleted)

**9.** (Deleted)

**10.** (Deleted)

**11.** (Deleted)

**12.** (Deleted)

**13.** (Deleted)

**14.** (Deleted)

**15.** (Deleted)

**16.** (Deleted)

**17.** (Deleted)

**18.** (Deleted)

**19.** (Deleted)
